# EUROPEAN PATENT APPLICATION

(11) **EP 2 884 409 A1**
(43) Date of publication of application: **17.06.2015**
(21) Application number: 14196436.1
(22) Date of filing: 05.12.2014
(51) Int. Cl.: G06F 17/30

(54) **Context aware, proactive digital assistant**

(30) Priority: 10.12.2013 US 201314102033
(71) Applicant: Harman International Industries, Incorporated, Stamford, CT 06901 (US)
(72) Inventor: Di Censo, Davide, Stamford, CT Connecticut 06901 (US); Marti, Stefan, Stamford, CT Connecticut 06901 (US); Juneja, Ajay, Stamford, CT Connecticut 06901 (US)
(74) Representative: Grünecker Patent- und Rechtsanwälte PartG mbB

(57) **Abstract**

A digital assistant system may be used to proactively retrieve and provide information to a user based on an identified context of the user's environment and/or activities. By monitoring a user's environment and/or activities, an inference can be made about what supplemental information the user may find helpful and/or relevant. The supplemental information can be proactively retrieved and presented to the user. The system can include one or more sensors to gather information about the user's environment and/or activities. The system can also include one or more output modules for proactively providing information to the user, such as a speaker for providing information in an auditory format and a display for providing information in a visual format. The system can be wearable and always on so that it can quickly and unobtrusively provide information to the user.

## Description

### BACKGROUND

Many applications rely on a user to provide them with relevant information which the applications then use to identify supplemental information that may be of interest to the user. For example, when performing a standard Internet search, the user can provide a question she wants answered or a topic that she wants more information about. Based on this information, a search engine may proceed to find a list of results that may provide the user with the information she needs. Although much progress has been made in identifying and providing a list of results that are relevant to the user's search, these algorithms are dependent upon the user to provide the initial query. That is, the applications require a user to first tell them what the user wants to know before the applications can use their algorithms to find the answer. For example, if a user is asked a question but does not know the answer, the user first must retrieve a personal computing device (e.g., a smart phone) and speak or type a command in order to identify the answer.

### SUMMARY

One embodiment of the present disclosure includes a system for proactively providing information. The system includes a sensor, wearable by a user, configured to detect at least one aspect of a user's environment and an output module configured to present information to the user. Using control logic, the system identifies a context of the user's environment from the detected aspect of the user's environment, retrieves information relevant to the identified context, and proactively presents the retrieved information to the user through the output module.

Another embodiment of the present disclosure includes a method for proactively providing information. The method includes detecting at least one aspect of a user's environment using environmental sensors associated with the user and identifying a context of the user's environment from the detected at least one aspect of the user's environment based on a relavancy between the detected aspect and an attribute associated with the user. The method also retrieves information relevant to the identified context and proactively presents the retrieved information to the user.

Another embodiment of the present disclosure includes a computer program product for proactively providing information to a user. The program product includes computer-readable program code configured to capture environmental context data associated with the user and identify an activity of a user within the captured context data. Furthermore, the program product includes program code that evaluates the activity to determine whether to provide supplemental information regarding the activity to the user. Upon determining to provide the supplemental data, the program product retrieves supplemental information associated with the activity and proactively presents the retrieved information to the user.

### BRIEF DESCRIPTION OF THE SEVERAL VIEWS OF THE DRAWINGS

FIG. 1 illustrates a digital assistant system;
FIG. 2 is a cross-sectional view of an embodiment of a wearable digital assistant positioned relative to a user's ear;
FIG. 3 is a block diagram of components of the digital assistant system;
FIGS. 4A-4J illustrate exemplary configurations of a wearable digital whispering assistant;
FIG. 5 is a flow diagram of an embodiment of processes performed by a processing module of the digital assistant system;
FIG. 6A illustrates an exemplary scenario for capturing context using the digital assistant system;
FIG. 6B illustrates an exemplary image that may be captured by an imaging module of the user's environment and/or activities in the scenario described above with reference to FIG. 6A;
FIG. 7A illustrates an exemplary scenario for capturing context using the digital assistant system;
FIG. 7B illustrates an exemplary image that may be captured by an imaging module of the user's environment and/or activities in the scenario described above with reference to FIG. 7A;
FIG. 8A illustrates an exemplary scenario for capturing context using the digital assistant system; and
FIG. 8B illustrates an exemplary image that may be captured by an imaging module of the user's environment and/or activities in the scenario described above with reference to FIG. 8A.

### DETAILED DESCRIPTION

Embodiments of the present disclosure include a digital assistant system which may include at least one sensor, an output module, and control logic. The sensor(s) can detect one or more aspects of a user's environment, such as spoken words, sounds, images of the user's surrounding, and/or actions of the user. The control logic, which can be included in a processing module, for example, can identify a context of the user's activities and/or environment from the aspect(s) detected by the sensor(s). Then, the system can proactively retrieve additional and/or supplemental information that is relevant to the identified context of the user's activities and/or environment and proactively present the retrieved information to the user.

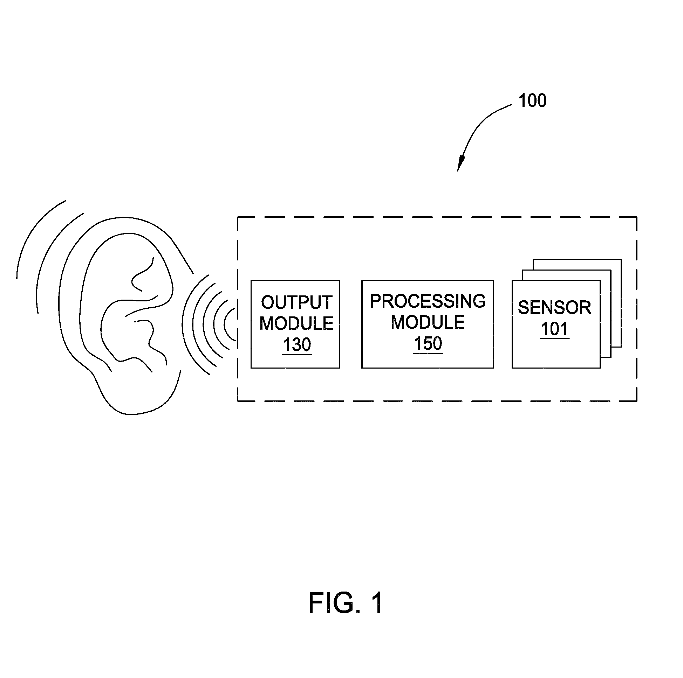

FIG. 1 illustrates a digital assistant system 100, according to one embodiment described herein. In one embodiment, the digital assistant system 100 may be context aware of the environment proximate to the system 100. The context captured by the digital assistant system 100 may include, but is not limited to, location, direction, orientation, speed of movement, mode of transportation, or social interaction of humans or objects in the environment proximate to the system 100. The context captured by the system 100 may further include information about a user of the digital assistant system 100 such as the user's mood, breathing rate, temperature, galvanic skin response, eye-gaze direction (e.g., direction the user is staring), movement, facial expression, pupil dilation, health diagnostics (e.g., insulin level), and the like.

To capture the context, the digital assistant system 100 may include a plurality of sensors 101 which may individually, or in combination, gather environmental data that enable the digital assistant system 100 to identify the current context of the environment proximate to the system 100 as well as information about the user. The various types of sensors 101 will be discussed in greater detail below. Generally, the sensors 101 capture environmental data and convert the environmental data into data that can be processed by a processing module 150. For example, the sensor or the processing module 150 may take analog environmental data and convert this data into digital data. The processing module 150 may then use the various techniques described herein to proactively identify additional and/or supplemental information that is relevant to the context of the user's activities and/or environment.

Once relevant additional and/or supplemental information is identified, the digital assistant system 100 may use an output module 130 to provide this information to the user. As shown in FIG. 1, the output module 130 may "whisper" the relevant information (i.e., output speech) to the user of the digital assistant system 100. In this manner, the digital assistant system 100 may proactively identify and provide relevant information without an explicit request from the user for the information.

The sensors 101, processing module 150, and output module 130 of the digital assistant system 100 may be integrated into a single physical device or be distributed and communicatively connected via wired or wireless communication. If the various components of the system 100 are integrated into a single device, the device may be an earpiece that is worn by the user. Alternatively, the components may be distributed as stand-alone components or integrated into a plurality of different physical devices. For example, the sensors 101 and processing module 150 may be integrated into a smart phone, tablet computer, or other mobile or wearable computing device while the output module 130 is integrated into an earpiece. As used herein, "wearable" indicates that a component or system can be physically attached to a user either by design or through the use of a fastening element, or that the component or system is portable by the user - i.e., the user can carry the component or system. The earpiece may be communicatively coupled to the computing device such that data is transferred between the sensors 101, processing module 150, and the output module 130 in order to proactively provide relevant information to the user.

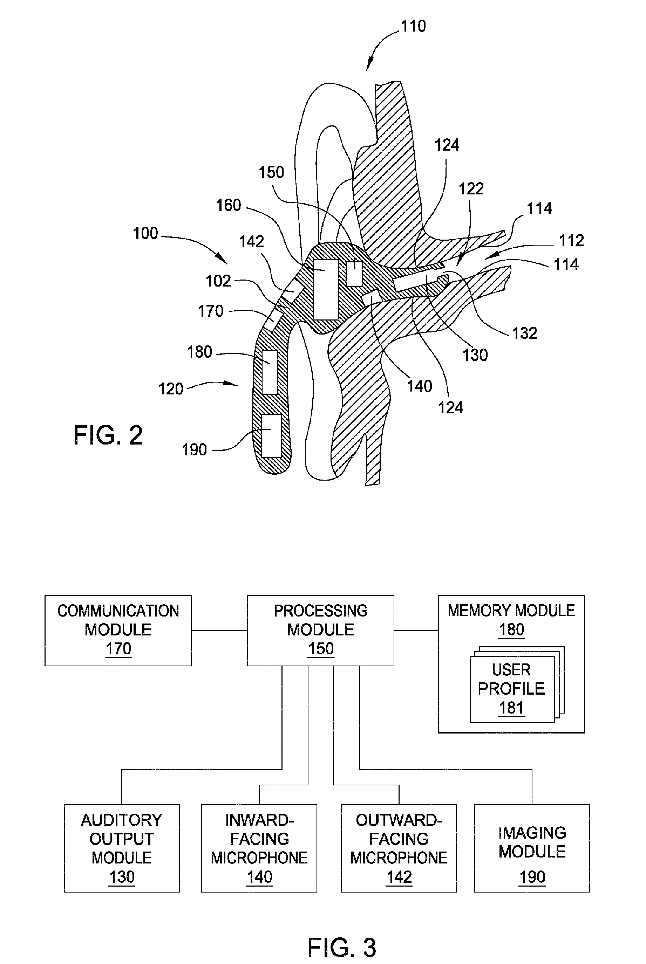

With reference now to FIG. 2, various embodiments of a proactive digital assistant 100 can include a housing 102 that is positionable relative to a user's ear 110. The housing 102 can include an internal portion 122 that can fit within the user's ear canal 112 and an external portion 120 that is outside of the user's ear canal 112. Walls 124 of the internal portion 122 of the housing 102 can engage walls 114 of the user's ear canal 110 to hold the housing 102 snugly in the user's ear 110. The housing 102 can include a processing module 150, a communications module 170, a memory module 180, and a power supply 160. The power supply 160 can supply power to the remaining components of the digital assistant 100. In various embodiments, the power supply 160 can comprise a battery, a fuel cell, a wireless power transmission module, and/or a capacitor, for example. The housing 102 can include one or more sensors for sensing a user's environment and/or activities. For example, the housing 102 can include an outward-facing microphone 142 that detects sounds from the user's environment. The housing 102 can also include an inward-facing microphone 140 that is pressed against the walls 114 of the user's ear canal 110 such that the inward-facing microphone 140 only detects the sounds within the user's head, for example, by taking advantage of the effects of bone and tissue conductivity. For example, the inward-facing microphone 140 can detect the sounds of the user's voice but cannot detect the voices of other people proximate to the user. The housing 102 can also include an imaging module 190, such as a digital camera, that can capture images and/or video of the user's environment. In certain embodiments, the imaging module 190 can be forward-facing such that the imaging module 190 sees approximately what the user is seeing.

The digital assistant 100 can include and/or use other sensors to gather environmental data that can enable the processing module 150 to determine a context of the user's environment and/or activities. The assistant 100 may include additional sensors used to determine location and orientation of the user wearing the assistant 100 such as eye gaze sensors, and other user body tracking sensors in addition to the visual and auditory sensors discussed above. Examples of other sensors can include, but are not limited to, temperature sensors, magnetic sensors, inertial sensors, depth and range sensors, motion sensors, skin conductivity sensors, muscle activity sensors, neural activity sensors, olfactory sensors, and the like.

The housing 102 includes a communication module 170 and/or a memory module 180. For example, the communication module 170 can include a Wi-Fi adapter, a cellular communications adapter, a BLUETOOTH® adapter, and/or a Universal Serial Bus (USB) adapter that can enable communications with an external data system to retrieve information. The housing 102 can also include a global positioning system ("GPS") adapter that can determine a location of the housing 102. The GPS adapter can be incorporated into the communication module 170, incorporated into a different module (e.g., the processing module 150), and/or be a stand-alone component, for example. In various embodiments, the communications module 170 can communicate with an external computing device, a cellular network, and/or the Internet. In various embodiments, the communication module 170 can be in communication with the processing module 150. In various other embodiments, the communication module 170 can be integral with the processing module 150.

The housing 102 can also include auditory output module 130, such as a speaker, positioned in the internal portion 122 of the housing 102. The internal portion 122 of the housing 102 can include a channel 132 (e.g., an opening and/or passageway) through which sound from the auditory output module 130 can reach the user's ear canal 112. Referring again to FIG. 3, the auditory output device can communicate with the processing module 150 such that the relevant information retrieved by the processing module 150 can be transmitted to the user via the auditory output module 130. Alternatively to or in combination with the auditory output module 130, the processing module 150 can communicate with an optical output device, such as a video screen arranged in the user's line of sight, to transmit retrieved information to the user. Examples of video screens can include, but are not limited to, a dedicated video display, a small video display incorporated into eye glasses worn by the user, a smart phone display, or a wearable display.

In one embodiment, the various components in the digital assistant 100 may be modular such that the components may be packaged as add-ons to the form factor of the digital assistant 100. For example, a GPS component, cellular component, BLUETOOTH component, and the like may be easily disconnected or connected to the digital assistant 100. Thus, a user may customize the digital assistant 100 by changing the different modular components connected to the assistant 100 at a communication interface.

With reference to FIG. 3, in various embodiments, the inward-facing microphone 140, outward-facing microphone 142, and imaging module 190 can be in communication with the processing module 150 such that the processing module 150 can receive the sounds and/or images of the microphones 140, 142 and/or the imaging module 190, respectively. The processing module 150 can analyze the sounds and/or images to identify a context of the user's environment and/or activities.

The memory module 180 can include random access memory in the form of DRAM, SRAM, Flash memory, and the like. Referring again to FIG. 3, in various embodiments, the memory module 180 can be in communication with the processing module 150. In various other embodiments, the memory module 180 can be integral with the processing module 150. After the processing module 150 has analyzed the sounds and/or images from the microphones 140, 142 and/or the imaging module 190, the processing module 150 can retrieve supplemental information relevant to the user's environment and/or activities from the communication module 170 and/or the memory module 180. For example, the memory module 180 may include stored information of common facts, such as a list of United States Presidents, that the processing module 150 can retrieve. The memory module 180 can also store information that is specific to the user. In one embodiment, the module 180 may store a user profile 181 that includes the interests of the user, common facts related to the user's interests, or the user's dislikes. For example, if the user is a scientist, then the memory module 180 can store information related to science, such as commonly-used scientific constants, scientific formulae, and the like. By contrast, if the user is an art historian, then the memory module 180 can be configured to store information related to art, such as names of famous paintings and the names of artists.

In various embodiments, the memory module 180 can maintain a log of the user's recent activities. For example, the memory module 180 can maintain a record of items that the user recently purchased at a grocery store. In various embodiments, the imaging module 190 can capture images of items the user picks up and the processing module 150 can store a record of the item in the memory module 180. As another example, the memory module can keep a record of the user's calendar of events. For example, the memory module can retrieve a copy of the user's calendar that is maintained on a computer network via the communications module. The control logic and/or processing module can communicate with the memory module to retrieve the information relevant to the user's activities and/or environment. In one embodiment, the user's recent activities or calendar of events may be used to update the user profile 181.

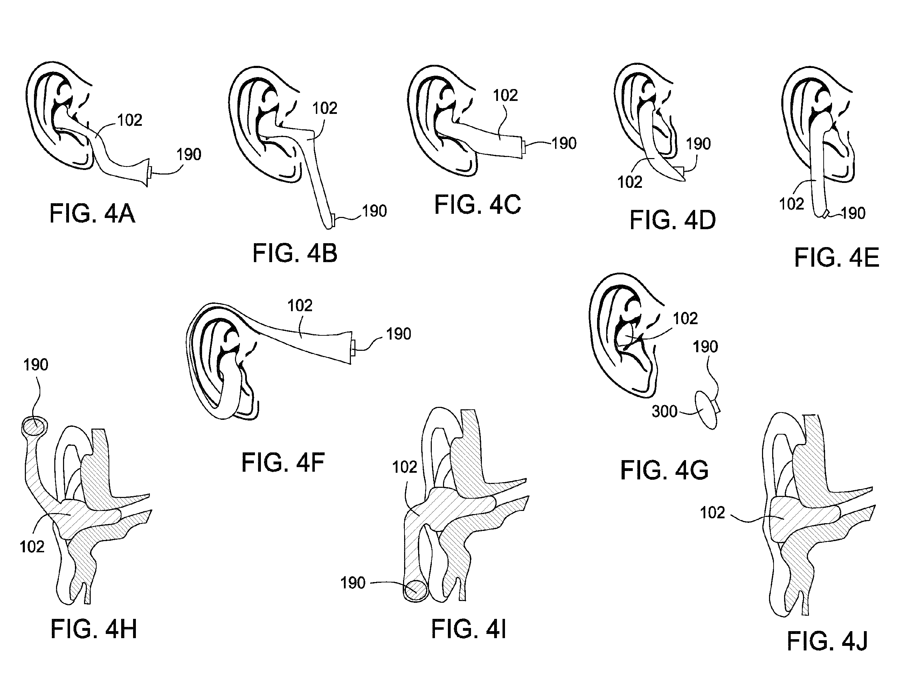

Turning now to FIGS. 4A-4J, the digital assistant 100 described herein can be configured in many different ways. For example, FIGS. 4A-4E, 4H, and 4I, illustrate different embodiments of a wearable digital assistant in which the housing 102 can include a different shape and configuration to position the attached imaging module 190 in a different location relative to a user's ear. By contrast, FIG. 4G illustrates an embodiment in which the imaging module 190 is not attached to the housing. Instead, the imaging module 190 can be attached to the user in another manner. For example, FIG. 4G illustrates the imaging module 190 as being attached to a necklace pendant 300 or similar piece of jewelry. In other embodiments, the imaging module 190 can be attached and/or incorporated into a wristwatch, smart phone, and/or an article of clothing, for example. FIG. 4J illustrates an embodiment in which the digital assistant does not include an imaging module. Rather, the digital assistant can be configured to receive an imaging signal from a different imager, e.g., connecting to a camera in a smart phone via a BLUETOOTH wireless connection. Similarly, other sensors (e.g., microphones) can be remotely arranged.

In certain embodiments, other features of the digital assistant 100, such as the microphones 140, 142 and the auditory output module 130 are not attached to and/or incorporated into the housing 102. For example, in certain embodiments, the digital assistant can include a housing that is kept in a pocket or clipped to a belt. Further still, the various sensors may be mounted to a vehicle associated with the user - e.g., car, bicycle, or motorcycle. In such embodiments, the auditory output module can include headphones connected to the processing module in the housing by a wired connector or wireless connection, e.g., a BLUETOOTH wireless connection. Similarly, the inward-facing microphone and outward-facing microphone can be separate from the housing 102 and can be connected to the processing module in the housing by a wired or wireless connection. In one embodiment, the digital assistant may be linked to an electronic device associated with the user. For example, to reduce the size of the digital assistant or to increase its battery life, the digital assistant may use a smart phone, tablet computer, or other computing device proximate to the user to proactively determine output for the user.

In one embodiment, the digital assistant system may use a communication protocol to transfer the environmental data captured by the sensors to the proximate electronic device. The processors in the electronic device may be used as the processing module 150. The electronic device may then transmit the suggestion to the output module 130 which outputs the suggestion to the user. Doing so may reduce the form factor (as well as cost) of the portion of the digital assistant system that is mounted on a user's ear and leverage the processing power in a proximate electronic device. Furthermore, instead of transferring the captured environmental data to a proximate electronic device, the digital assistant system may use a cellular connection to transmit the data to computing systems in a cloud that can use the environmental data to generate a suggestion which is then sent to the output module 130 using the cellular connection.

In various embodiments, the imaging module 190 can be steerable relative to the housing 102 to allow the field of view of the imaging module 190 to be adjusted. For example, the processing module 150 can provide steering commands to an electric motor or the like that can steer the imaging module 190 to point in various directions. For example, the imaging module may be pointed in the general direction of the user's eye gaze, in a direction behind the user, in a direction above or below the user's eye gaze direction, and/or in a direction to the side of the user's eye gaze direction.

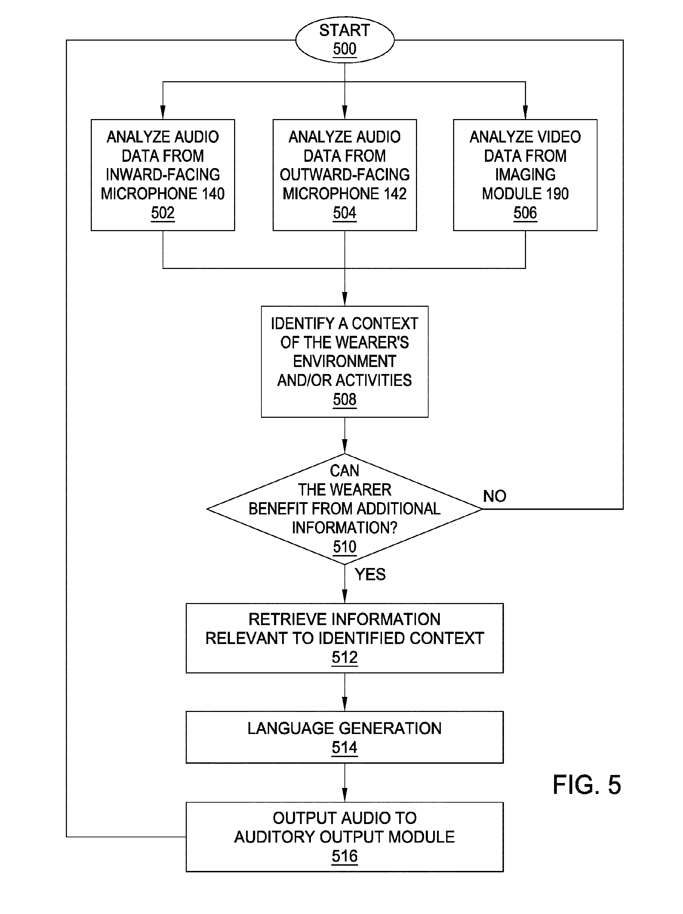

FIG. 5 shows an exemplary flow chart of a process that various embodiments of the processing module 150 can implement to proactively provide relevant information to the user of the digital assistant system 100. After the start (step 500) of the process, the processing module 150 can analyze environmental data detected by the inward-facing microphone 140 (step 502), the outward-facing microphone 142 (step 504), the imaging module 190 (step 506) and any other sensors connected to the processing module 150. The processing module 150 can analyze the detected environmental data from one or more of the microphones 140, 142 and the imaging module 190 to identify a context of the user's environment and/or activities (step 508). In one embodiment, the digital assistant system 100 may constantly analyze the environmental data captured by the sensors to identify context. In other embodiments, however, the digital assistant system 100 may identify context based on location of the user, time of day, or information stored in the user profile. For example, in order to conserve power, the system 100 may not use the sensors to capture environmental data during certain predefined periods of time when the user is not likely to want supplemental information from the digital assistant.

After determining the context of the user's environment and/or activities (step 508), the processing module 150 can determine whether the user can benefit from additional information being proactively provided (step 510). For example, the user's environment and/or activity may be characterized based on time associated with the activity or an activity type (e.g., shopping, participating in a meeting, asking a question, etc.). Depending on the characterization, the digital assistant system determines whether to provide the additional or supplemental information. More generally, the digital assistant system may compare the context of the environment to an attribute associated with the user; examples of such attributes include the activity the user is performing (shopping, watching television, eating at a restaurant, and the like) and characteristics of the user (e.g., information stored in the user profile, job title, hobbies, family status, and the like). If not, then the processing module 150 can return to the start (step 500) of the process. If the processor determines that the user can benefit from additional information being proactively provided (step 510), then the processing module 150 can retrieve information relevant to the user's environment and/or activities (step 512). In one embodiment, the relevant information may be information that is not directly retrievable or identifiable from the auditory or video information captured in steps 502, 504 and 506. For example, using the context, the processing module 150 may query a data source (e.g., an internal memory or the Internet) to provide supplemental information that is relevant to the user. In this manner, the processing module 150 searches for information that not found in the captured context that may be relevant to the user. The association of such supplemental information to the context may be accomplished by use of semantic comparisons, ontologies, object recognition, etc. The processing module 150 can then translate the retrieved information into a form that the user can understand (step 514). For example, the processing module 150 can translate the retrieved information into English speech. For example, if the processing module 150 retrieved the numerical value for the irrational number pi (3.14159...), the processing module 150 can translate the data into "three point one four one five nine." The processor can then transmit the translated data to the auditory output module 130 for the user to hear (step 516).

By providing information proactively to the user, the digital assistant 100 may provide relevant data in a shorter time. For example, by identifying relevant environmental data using the environmental sensors (e.g., the video and/or audio sensors), the digital assistant 100 can provide supplemental information about the relevant data without prompt from the user. As used herein, a prompt from a user includes, but is not limited to, a verbal command, providing input to an electronic device (e.g., using a mouse, touch screen, keyboard, trackball, and the like), or starting an application. Nonetheless, the digital assistant 100 may also be responsive to prompts from the user. For example, if the digital assistant 100 proactively provides the cost of a book currently being viewed by the user, the user may issue a verbal instruction to the digital assistant to then purchase the book at an online bookstore. Or the digital assistant 100 may record the last thirty seconds of audio data proximate to the user which the user may be able to access for playback and/or storage by issuing a verbal command.

In certain embodiments, the digital assistant 100 can wait for cues that the user is ready to accept information before proactively providing retrieved information at step 516. For example, the processing module 150 can wait until after the user has stopped speaking, i.e., when the inward-facing microphone 140 does not detect the user's voice for some period of time, before proactively outputting retrieved information. Similarly, if the user is involved in a conversation, then the processing module 150 can wait until after the user and the other people have stopped speaking, i.e., when the inward-facing microphone 140 does not detect the user's voice and the outward-facing microphone 142 does not detect the voices of the other people for some period of time, to proactively output retrieved information. As another example, the processing module 150 may only proactively provide supplemental information about an object in the user's environment if the user focuses on the object for some length of time. For example, if the user is walking along a city sidewalk, the imaging module 190 can be detecting many objects, such as billboards, posters, and the like, passing through its field of view. If the user stops or turns his head to look at a particular object, e.g., a poster, then the object will be relatively static in the field of view of the imaging module 190. The processing module 150 can determine that the relatively static image of the object captured by the imaging module 190 is something the user is interested in and can proactively retrieve and output information related to the object to the user.

The following examples illustrate possible uses of a proactive digital assistant, such as the digital assistant 100 with reference to the exemplary process described above in connection with FIG. 5. In a first example, the user enters a book store and picks up a book. The imaging module 190 can capture an image of the book wherein the image can include the title of the book printed on the front cover (step 506). The processing module 150 can analyze the captured image and can determine that the user is shopping and would benefit from information related to user reviews of the book (step 510). The processing module 150 can then communicate with the communication module 170 to connect to an Internet website to look up review information for the book. For example, the website for the book picked up by the user may include rating information for the book, indicating that the book has received an average rating of four stars out of five. The processing module 150 can retrieve this rating information from the website (step 512). The processing module 150 can then generate a spoken-language presentation of the retrieved rating information (step 514) for the user. For example, the processing module 150 can generate a spoken phrase of "this book has received an average rating of four out of five stars." After the spoken-language presentation of the retrieved rating information has been generated, the processing module 150 can output the spoken-language presentation to the auditory output module 130 for the user to hear (step 516). In alternative embodiments, the processing module 150 can generate a graphical output, such as text stating "This book has received an average rating of four out of five stars " (step 514), and output the graphical output to a visual display (e.g., a video screen) in the user's line of sight (step 516).

After the processing module 150 has output the spoken-language presentation to the auditory output module 130, the processing module 150 can return to the start 500 of the process described in FIG. 5. For example, after hearing the average rating presentation, described above, the user may ask aloud "what is the price of the book?" The processing module 150 can analyze the audio data from the inward-facing microphone 140 (step 502) and can determine from the context of the user's words that the user is interested in pricing information (step 508). In one embodiment, the processing module 150 may first determine that the user is asking it to determine the pricing information in contrast to, e.g., asking another human being. For example, the processing module 150 may use the syntax of the question (e.g., if the user prefaced her question with "excuse me") to determine whether she is asking a human a question rather than the digital assistant system 100, and thus, the system 100 should not respond. Or the digital assistant system 100 may use a location (e.g., the user is at a help desk or is facing a human being) or volume of the user's voice (e.g., the user is whispering a question only a sensor in the digital assistant can detect) to determine whether to answer a question. The processing module 150 can determine that the user is asking for assistance (step 510) and can again use the communication module 170 to connect to a book selling website or perform an Internet search to retrieve the pricing information for the book the user is holding. For example, the website for the book may include price information for the book that indicates a sale price of $12.99. The processing module 150 can retrieve the price information from the website (step 512) and then generate a spoken-language presentation of the retrieved price information. For example, the processing module 150 can generate a spoken phrase of "this book is on sale at the book selling website for twelve dollars and ninety nine cents" (step 514). After the spoken-language presentation of the retrieved rating information has been generated, the processing module 150 can output the spoken-language presentation to the auditory output module 130 for the user to hear (step 516).

In a second example, a user is at the airport waiting to board a flight and looks at his boarding pass. The imaging module 190 can capture an image of the boarding pass that can be communicated to the processing module 150 and the processing module 150 can analyze the captured image to parse out the flight number, gate number, and departure time (step 506). The processing module 150 can determine that the user is waiting for his flight (step 508) and that the user would benefit from updated and/or changed information about his flight or directions to the airport/gate (step 510). For example, the processing module 150 may determine that the user is looking at flight information and that the departure time is in the future. Accordingly, the module 150 may then determine that proactively providing updated flight information may be useful to the user. The processing module 150 can then communicate with the communication module 170 to access up-to-date information about the flight. For example, the communication module 170 may use a cellular adapter or a Wi-Fi adapter to access the airline website to check the gate number and departure time associated with the flight number and compare the online information to the information parsed from the ticket. For example, the ticket may list a departure time of 6:00 PM, but the airline website may include information indicating a delayed departure time of 6:30 PM. The processing module 150 can retrieve the delayed departure time from the website (step 512) and generate a spoken-language presentation of the retrieved departure time (step 514). For example, the processing module 150 can generate a spoken phrase of "your flight is delayed until six thirty PM." After the spoken-language presentation of the retrieved flight delay information has been generated, the processing module 150 can output the spoken-language presentation to the auditory output module 130 for the user to hear (step 516).

In various circumstances, the information provided by the digital assistant 100 may be subject to change. Referring to the boarding pass example above, the departure time may be delayed further or the delay may be resolved such that the flight can leave on time. In such circumstances, the processing module 150 can periodically retrieve the information again to see if there has been a change. The processing module 150 may only provide the updated information if there has been a change. For example, if the processing module 150 checks the departure time again and determines that the delayed departure time is still 6:30 PM, then the processing module 150 may not present the information to the user a second time. However, if the processing module 150 determines that the delayed departure time is now 7:00 PM, then the processing module 150 can generate a spoken-language presentation of the updated information. For example, the processing module 150 can generate a spoken language phrase of "your flight has now been delayed by another half hour ... your departure time is now scheduled for seven o'clock PM." The digital assistant 100 may store a log of recent information provided (e.g., in the memory module 180) to keep track of information already provided to the user to ensure that information is not repeated. In various embodiments, the digital assistant 100 can include user-selectable preferences that allow the digital assistant 100 to repeat the presentation of updated-but-unchanged information.

In a third example, the user may perform a gesture that the wearable proactive digital assistant 100 can recognize and respond to. For example, the user may not be wearing a wrist watch, but he may move his arm towards his eyes as if looking at a watch, draw a circle on her wrist, or tap her wrist. The imaging module 190 of the digital assistance 100 can capture the user's movement of his arm toward his eyes (step 506). The processing module 150 can recognize the user's arm movement as being the same or similar to a gesture a person might make to look at a watch (step 508) and determine that the user would want to know the time (step 510). The processing module 150 can communicate with the communication module 170 to retrieve data of the current time from the Internet, for example. Alternatively, the processing device may include an internal clock that tracks the current time. In either event, the processing module 150 can retrieve the current time (step 512) and generate a spoken-language presentation of the retrieved time data (step 514). The spoken-language presentation can be output to the auditory output module 130 (step 516) for the user to hear.

In a fourth example, the user may be speaking with a colleague and the colleague may say "... just like what that guy at the meeting yesterday was saying ... I cannot remember his name right now ...." The colleague's voice can be detected by the outward-facing microphone 142 and the processing module 150 can analyze the colleague's spoken words (step 504) to identify that the colleague is discussing a meeting yesterday and is looking for a name of a person attending the meeting with the user (step 508). The processing module 150 can determine that providing the name of the person who attended the meeting would be useful to the user (step 510). The memory module 180 may include a plurality of keywords that are used to indicate when a user cannot answer a question or is trying to recall a historical event. For example, if the digital assistant detects the spoken words of "can't remember" or "I don't know," the assistant may then decide to proactively provide information to the user. In certain embodiments, the memory module 180 can include a calendar of the user's past, present, and future events. For example, the memory module 180 can store a record of yesterday's meeting that includes the names of attendees. The processing module 150 can communicate with the memory module 180 to retrieve the stored record and the names of the attendees (step 512). The processing module 150 can then generate a spoken-language presentation of the names of the attendees (step 514) to be output to the auditory output module 130. For example, the processing module 150 can generate a spoken-language phrase of "John Smith and Jane Doe attended the meeting yesterday" that can be output to the auditory output module 130 (step 516).

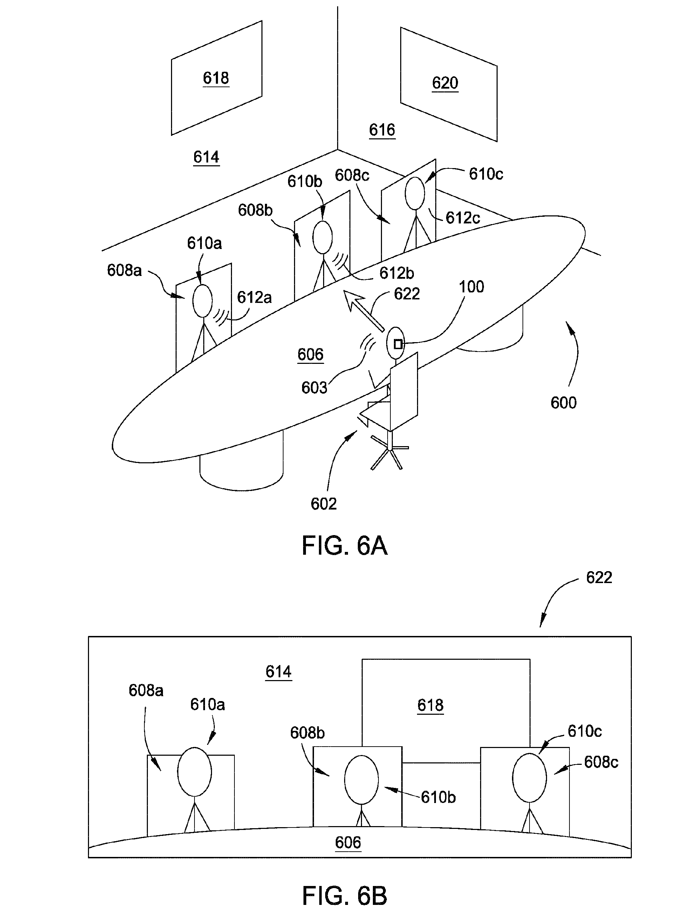

In certain embodiments, the digital assistant 100 can infer relevance based on combined inputs from all of the microphones 140, 142 and the imaging module 190. For example, and with reference to FIGS. 4, 6A, and 6B, if the user 602 is attending a meeting 600 while wearing a digital assistant 100 (e.g. wearing the digital assistant 100 on or in his ear), the outward-facing microphone 142 can be detecting multiple voices 612a, 612b, and 612c. Similarly, the inward-facing microphone 140 can be detecting the user's voice 603. Finally, the imaging module 190 is likely detecting a relatively static image 622 if the user 602 is stationary, e.g., sitting in the meeting. Arrow 622 illustrates a direction of view of the imaging module 190. For example, the imaging module 190 may be detecting a relatively static (i.e. stationary) image 622 of three people 610a, 610b, and 610c sitting in chairs 608a, 608b, and 608, respectively, around a table 606. Furthermore, the relatively static image 622 may be detecting the wall 614 of the meeting room and a picture 618 in the room. A second picture 620 on another wall 616 may not be in the image 622 captured by the imaging module 190. The processing module 150 can analyze the audio data from the microphones 140, 142 (steps 502 and 504) and the image data from the imaging module 190 (step 506) and infer that the user is stationary and is participating in a discussion. Consequently, the processing module 150 can ignore inputs that are irrelevant to the conversation. For example, the imaging module 190 may detect the picture 618 hanging on the wall 614 of the meeting room, but the processing module 150 can assume that the picture 618 is not relevant to the conversation and ignore it. Instead, the processing module 150 can analyze the words and phrases of the voices 612a, 612b, 612c, and 603 detected by the microphones 140, 142 and determine whether the user can benefit from additional information related to the conversation.

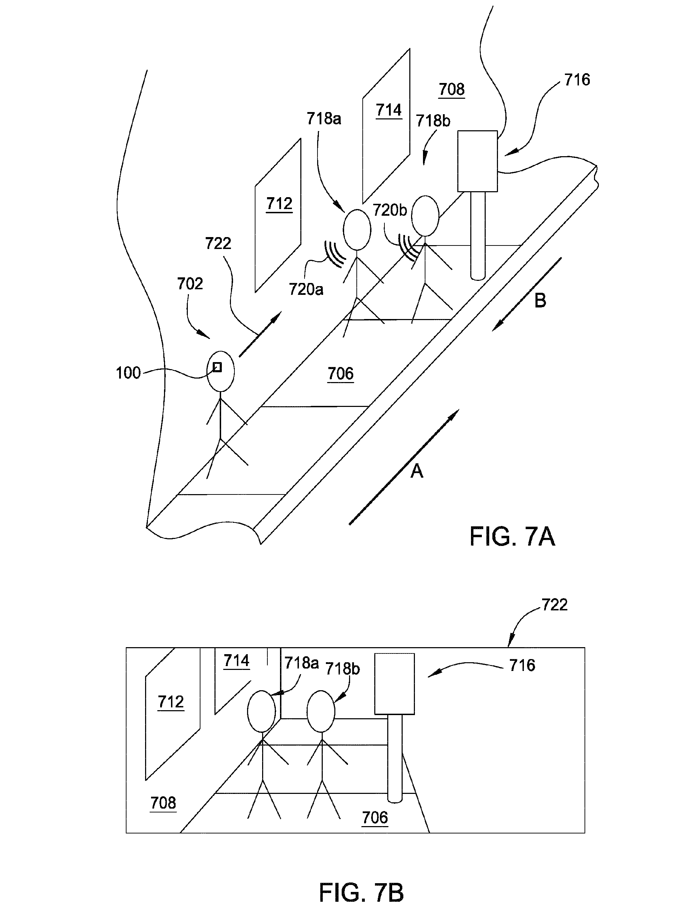

As another example, with reference to FIGS. 4, 7A, and 7B, if a user 702 is walking alone along a busy city sidewalk 706 in the direction of arrow A, the outward-facing microphone 142 of the digital assistant 100 can be detecting multiple voices 720a and 720b of different people 718a and 718b, respectively, the user 702 is passing as he walks. For example, the two people 718a and 718b can be walking in the direction of arrow B. However, since the user is not speaking to anyone, the inward-facing microphone 140 is not detecting the user's voice. Additionally, the imaging module 190 can be detecting a constantly changing image 722 as the user walks along. Arrow 722 illustrates a direction of view of the imaging module 190. For example, a captured image 722 can include images of various objects, such as the sidewalk 706, a wall 708, posters 712 and 714 on the wall 708. A captured image 722 can also include the other people 718a and 718b and a sign 716, such as a bus stop sign. As the user 702 walks in the direction of arrow A, the objects captured in a sequence of images 722 will move towards the user 702 (i.e. out of the page as shown in FIG. 7B). The processing module 150 can analyze the audio data from the microphones 140, 142 (steps 502 and 504) and the image data from the imaging module 190 (step 506) and infer that the user is walking, is not talking to anyone, and that the voices 720a and 720b being detected by the outward-facing microphone 142 are unimportant to the user. Consequently, the processing module 150 can assume that the conversations detected by the outward-facing microphone 142 are not important and can be ignored. Furthermore, the processing module 150 can infer that information about the user's 702 changing surroundings being detected by the imaging module 190 may be more relevant and useful to the user.

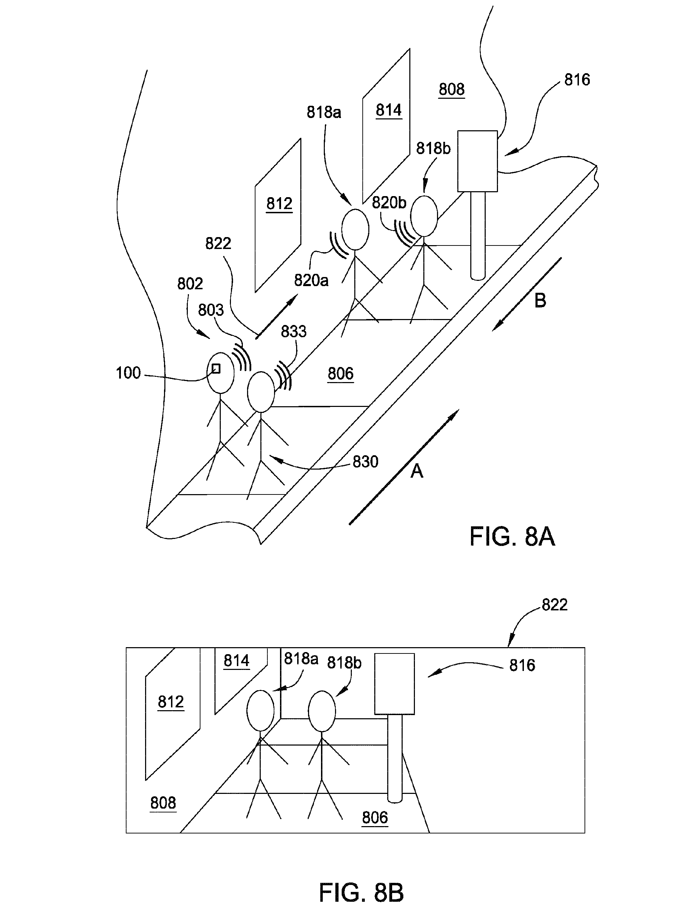

As another example, with reference to FIGS. 4, 8A, and 8B, a user 802 may be walking along a busy city sidewalk with a colleague 830 with whom he is talking. Here, the outward-facing microphone 140 may detect the voice 833 of the colleague 830 and also the voices 820a and 820b of other people 818a and 818b, respectively. The inward-facing microphone 140 can detect the user's voice 803 when the user 802 speaks to his colleague 830. Also, the imaging module 190 can be detecting a constantly changing scene as the user walks along. Arrow 822 illustrates a direction of view of the imaging module 190. For example, a captured image 822 can include images of various objects, such as the sidewalk 806, a wall 808, posters 812 and 814 on the wall 808. A captured image 822 can also include the other people 818a and 818b and a sign 816, such as a bus stop sign 816. As the user 802 walks in the direction of arrow A, the objects captured in a sequence of images 822 will move towards the user 802 (i.e. out of the page as shown in FIG. 8B). The processing module 150 can analyze the audio data from the microphones 140, 142 (steps 502 and 504) and the image data from the imaging module 190 (step 506) and infer that the user 802 is walking and that information about the user's 802 changing surroundings being detected by the imaging module 190 may be relevant and useful to the user. However, unlike the previous example, the user 802 is walking and talking to his colleague 830. The processing module 150 can analyze the audio data from the microphones 140, 142 (steps 502 and 504) to determine that one voice being detected by the outward-facing microphone 142, the colleague's voice 833, is consistent as the user 802 walks along whereas the voices 820a and 820b of other passersby 820a and 820b, respectively, come and go as the user 802 moves past them. Also, the processing module 150 can determine that the user's voice 803, detected by the inward-facing microphone 140, is only detected when the colleague's voice 833 is not detected, i.e., the user 802 and the colleague 830 take turns speaking. From this analysis, the processing module 150 can identify that the user 802 is in a conversation with the colleague 830, but that voices other than the user's and the colleague's can be ignored. In this manner, the processing module 150 may identify relevant information from the environmental data captured by the sensors in the digital assistant.

In various embodiments, the digital assistant 100 can provide a platform for advertising. For example, a magazine can pay an advertising fee to a service provider that provides a data connection, e.g., a cellular data connection, for the communication module 170. If the imaging module 190 detects an image of the magazine in the user's environment, e.g., if the user passes a newsstand selling the magazine, then the processing module 150 can output an advertisement to the auditory output module 130. For example, the advertisement could be a spoken language phrase of "a one year subscription to this magazine is available for only fifteen dollars." The advertising revenue could offset some or all of the cost of providing wireless data service to the digital assistant 100.

In certain instances, the digital assistant 100 can better determine what information is likely to be relevant and/or useful to the user if provided with a clue or a cue. In various embodiments, the user can preset preferences for the digital assistant 100 to help the processing module 150 determine what type of information the user would like to hear (step 510). For example, the user may set preferences associated with a user profile in the digital assistant 100 to indicate that he is environmentally conscious. Later, if the user picks up a bottle of laundry detergent (seen by the imaging module 190 in step 506) at the store, the processing module 150 can determine that the user is shopping for laundry detergent (step 508). By matching the user's current activity with the user's preset preferences in the profile, the processing module 150 can determine that the user would find information about other laundry detergents that might by more environmentally friendly to be useful information (step 510). Stated differently, the digital assistant may use the preferences set in the user profile to filter and identify relevant information captured by the visual or auditory sensors on the digital assistant. In this example, the processing module 150 can communicate with the communication module 170 to retrieve information (step 512) from the Internet about laundry detergent brands that are more environmentally friendly (step 514) and proactively communicate the retrieved information to the user (step 516).

As another example, the user may set preferences in the digital assistant 100 to indicate that he is trying to save money. Later, if the user picks up a bottle of laundry detergent (seen by the imaging module 190 in step 506) at the store, the processing module 150 can determine that the user is shopping for laundry detergent (step 508). Using the user's preset preferences in the user profile, the processing module 150 can determine that the user would find information about less-expensive laundry detergents to be useful information (step 510). Then, the processing module 150 can communicate with the communication module 170 to retrieve information (step 512) from the Internet about laundry detergent brands that are less expensive (step 514) and proactively communicate the retrieved information to the user (step 516).

The user profile may also be used to perform noise dampening. For example, the earpiece of the digital assistant 100 may include a selectable noise dampening feature. Based on the capture environmental data, the digital assistant may determine that the user is at a sporting clay course. The user profile may have a sporting clay preference where, when an audio sensor detects someone has shouted "pull", the processing module 150 activates the noise dampening function of the digital assistant in order to block out the sound of the gun's report that follows. After the processing module 150 determines the report has faded, it may deactivate the noise dampening feature. Of course, in such an example, the user may have two earpieces (one for each ear) that both have the selectable noise dampening feature.

In one embodiment, the digital assistant may store multiple user profiles associated with the user. The digital assistant may select which user profile to use in order to proactively provide information to the user based on a user's current context. For example, the digital assistant may have different profiles depending on the current activities being performed by the user - e.g., shopping versus working. The digital assistant may switch between the profiles by evaluating the environmental data captured by the sensors. For example, if the user walks into a shopping market, the digital assistant may use a shopping profile associated with the user. In contrast, if the use walks into his home, the digital assistant may switch to a family profile - e.g., reminds the user of upcoming birthdays, anniversaries, upcoming school events, and the like.

The digital assistant 100 can also use stored information about the user to offer suggestions. For example, the user may have been grocery shopping recently and the memory module 180 of the digital assistant 100 could have stored a list of everything the user purchased. In certain embodiments, the processing module 150 can generate the list by analyzing images of items put in the user's shopping cart that are captured by the imaging module 190, determining what each item is, and adding each item to a list stored in the memory module 180. If the user has set preferences in the digital assistant 100 to indicate that he is trying to save money and later enters a restaurant, the imaging module 190 can capture an image of the restaurant and the processing module 150 can analyze the image (step 506) and determine that the user is about to spend money on food at a restaurant (step 508). Based on the user's preset preference of saving money, the processing module 150 can recognize that the user would benefit from information related to less-expensive alternatives to the restaurant (step 510). For example, the processing module 150 can communicate with the memory module 180 to retrieve information from the list of purchased grocery items to suggest a homemade meal (step 512). For example, the retrieved list of purchased grocery items may include pasta and pasta sauce. The processing module 150 can generate a spoken language phrase such as "you bought pasta and pasta sauce yesterday at the grocery store ... making pasta at home would be less expensive than eating out" (step 514) and proactively output this phrase to the auditory output module 130 (step 516). Or if the user set the preferences to correspond to a user's diet or desire to eat healthy, the digital assistant may proactively provide the nutritional information associated with a menu item currently being viewed by the user (e.g., calories, grams of fat, vitamins, etc.) or the assistant may look up reviews for the restaurant and inform the user of the highest rated dishes.

In certain embodiments, the digital assistant 100 can learn about the user to determine what information the user may find relevant and useful. For example, if the user asks follow up questions to certain types of proactively-provided information, e.g., price information, then the digital assistant 100 can infer that the user will find pricing information useful and relevant in the future. Conversely, if the user ignores proactively-provided information about product ratings, then the digital assistant 100 can infer that the user is not interested in ratings and can stop offering ratings in the future.

In various embodiments, the processing module 150 can incorporate machine learning algorithms to improve its ability to identify context. For example, the processing module 150 can use concurrent multiple-instance learning (MIL) to learn how various inputs from multiple sensors can likely be associated with a particular context. In the MIL framework, there are two levels of training inputs: bags and instances. A bag includes multiple instances. Here, a bag is the context of the user's environment and/or activities and an instance is an input from a sensor, such as a sound heard by the inward-facing microphone 140 or by the outward-facing microphone 142, or seen by the imaging module 190. A bag is labeled positive if at least one of the instances falls within the identified context. During machine training using MIL, a label is required only for a bag, not the instances in a bag. In the case of identifying a context, a labeled context (e.g. sitting in a meeting room for a meeting) is a bag and the different inputs from the sensors (e.g., voice of the user detected by the inward-facing microphone 140, voices of others being detected by the outward-facing microphone 142, and a relatively static image being detected by the imaging module 190) are instances. Although any one of the sensor inputs (e.g. detecting the voices of other people) alone may not signify a meeting, the combination of sensor inputs tend to appear simultaneously during a meeting. Such a co-existence or concurrency can significantly boost the confidence level that the combined sensor inputs (i.e. the combined instances) signify a meeting as the context of the user's environment and/or activities. In various embodiments, the processing module 150 can include and/or can access a database of different types of sensor inputs and concurrencies between different sensor inputs. The database can also include types of contexts that are likely to exist when a concurrence of sensor inputs occurs. In one embodiment, the context type may be used to select a particular profile associated with the user in order to identify situations where information should be proactively provided to the user.

In various embodiments, the digital assistant 100 can be customized by a user to provide more-detailed or less-detailed information. The digital assistant can also be customized to provide information more or less frequently. For example, in certain embodiments, the housing 102 can include buttons to enable the user to adjust such settings. In other embodiments, the user can connect the digital assistant 100 to a smart phone, laptop computer, desktop computer, tablet computer, or the like, via the communications module 170 (e.g. a USB adapter) to adjust these settings.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a non-transitory computer readable medium, for example, that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

Embodiments of the disclosure may be provided to end users through a cloud computing infrastructure. Cloud computing generally refers to the provision of scalable computing resources as a service over a network. More formally, cloud computing may be defined as a computing capability that provides an abstraction between the computing resource and its underlying technical architecture (e.g., servers, storage, networks), enabling convenient, on-demand network access to a shared pool of configurable computing resources that can be rapidly provisioned and released with minimal management effort or service provider interaction. Thus, cloud computing allows a user to access virtual computing resources (e.g., storage, data, applications, and even complete virtualized computing systems) in "the cloud," without regard for the underlying physical systems (or locations of those systems) used to provide the computing resources.

Typically, cloud computing resources are provided to a user on a pay-per-use basis, where users are charged only for the computing resources actually used (e.g. an amount of storage space consumed by a user or a number of virtualized systems instantiated by the user). A user can access any of the resources that reside in the cloud at any time, and from anywhere across the Internet. In context of the present disclosure, a user may access applications (e.g., video processing and/or speech analysis applications) or related data available in the cloud.

The flowchart and block diagrams in the Figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. A system for proactively providing information, comprising:
a sensor, wearable by a user, configured to detect at least one of visual data and auditory data associated with an environment of the user;
an output module configured to present information to the user; and
control logic configured to perform an operation comprising:
identifying a context of the environment of the user from the detected at least one of visual data and auditory data associated with the environment of the user;
retrieving information relevant to the identified context; and
proactively presenting the retrieved information to the user through the output module.

2. The system of claim 1, wherein the output module comprises an speaker configured to be positioned in or proximate to an ear canal of the user, and wherein proactively presenting the retrieved information to the user comprises presenting the retrieved information in an audio format to the user through the speaker.

3. The system of claim 1 or 2, wherein the output module comprises a visual display, wearable by the user, configured to be positioned in a line of sight of the user, and wherein proactively presenting the retrieved information to the user comprises presenting the retrieved information in a video format to the user through the visual display.

4. The system of any of claims 1-3, wherein the wearable sensor comprises a microphone configured to detect the voice of the user, and wherein identifying a context of the environment of the user comprises:
detecting the spoken words of the user; and
identifying a context related to at least one of the spoken words.

5. The system of claim 4, wherein the system proactively presents the retrieved information when the microphone does not detect the voice of the user for a predetermined period of time.

6. The system of any of claims 1-5, wherein the sensor comprises a microphone configured to detect sounds from the environment of the user, and wherein identifying a context of the environment of the user comprises:
detecting at least one of sounds and voices in the environment of the user; and
identifying a context related to at least one of the sounds and voices.

7. The system of claim 6, wherein the system proactively presents the retrieved information when the microphone does not detect the at least one of sounds and voices in the user's environment for a predetermined period of time.

8. The system of any of claims 1-7, wherein the wearable sensor comprises an imaging sensor configured to capture images of the environment of the user, and wherein identifying a context of the environment of the user comprises:
capturing at least one image in the environment of the user; and
identifying a context related to at least one image in the environment of the user.

9. The system of any of claims 1-8, wherein the sensor, output module, and control logic are integrated into a common housing, the housing being wearable by the user.

10. A method for proactively providing information, comprising:
detecting at least one of visual data and auditory data associated with an environment of a user using environmental sensors associated with the user;
identifying a context of the environment of the user from the detected at least one of visual data and auditory data associated with the environment of the user based on a relavancy between the detected aspect and an attribute associated with the user;
retrieving information relevant to the identified context; and
proactively presenting the retrieved information to the user.

11. The method of claim 10, wherein proactively presenting the retrieved information to the user comprises presenting the retrieved information to the user in an audio format.

12. The method of claim 10 or 11, wherein proactively presenting the retrieved information to the user comprises presenting the retrieved information to the user in a visual format.

13. A computer program product for proactively providing information, the computer program product comprising:
a computer-readable storage medium having computer-readable program code embodied therewith, the computer-readable program code comprising:
computer-readable program code configured to capture environmental context data associated with a user;
computer-readable program code configured to identify an activity of a user within the captured context data;
computer-readable program code configured to evaluate the activity to determine whether to provide supplemental information regarding the activity to the user;
computer-readable program code configured to, upon determining to provide the supplemental data, retrieve supplemental information associated with the activity; and
computer-readable program code configured to proactively present the retrieved information to the user.

14. The computer program product of claim 13, wherein the computer-readable program code is configured to present the retrieved information to the user as an audio presentation.

15. The computer program product of claim 13 or 14, wherein evaluating the activity to determine whether to provide supplemental information comprises:
characterizing the activity based on a temporal time value or an activity type associated with the activity; and
comparing the characterization of the activity to a relevance threshold, wherein if the characterization satisfies the relevance threshold, indicates that the supplemental information should be retrieved, otherwise, the supplemental information should not be retrieved.
